# EUROPEAN PATENT SPECIFICATION

(11) **EP 2 623 770 B1**
(45) Date of publication and mention of the grant of the patent: **24.06.2015**
(21) Application number: 12153679.1
(22) Date of filing: 02.02.2012
(51) Int. Cl.: F03D 1/06

(54) **Rotor hub for a wind turbine**
Rotornabe für eine Windturbine
Moyeu de rotor pour éolienne

(43) Date of publication of application: 07.08.2013
(73) Proprietor: Siemens Aktiengesellschaft, 80333 München (DE)
(72) Inventor: Laursen, Christian, 8722 Hedensted (DK)

(56) References cited:
- EP-A2- 2 363 601
- WO-A2-2011/076795
- US-A1- 2006 153 675
- Changzhou Bolong Three Dimensional Composites Co.,Ltd.: "Products - Wind Energy", corporate website , 26 October 2010 (2010-10-26), XP002679808, Retrieved from the Internet: URL:http://www.bolong3d.com/en/productshow .asp?id=4 [retrieved on 2012-07-16]

## Description

The invention relates to a rotor hub for a wind turbine, adapted to support or supporting at least one rotor blade, with the rotor hub comprising a base body having a first section providing a connecting site connectable with a wind turbine structure and an opposing second section providing a freely exposed front portion.

Rotor hubs for wind turbines or so called spinners are essential components of a wind turbine and are usually rotatably supported relative to the nacelle of a wind turbine. For example WO2011/076795 shows a casted rotor hub.

With the dimensions of modern wind turbines having steadily increased in the last decades, the dimensions of respective rotor hubs have increased as well, whereby respective large-dimensioned rotor hubs have high weight and therefore may be problematic in regard of handling. Aside, respective large-dimensioned rotor hubs are usually cast parts which is problematic since appropriate constructive designs, i.e. geometrically shapes, are often limited which may result in constructive designs which may not be ideal in regard of structural loads to be carried by the rotor hub during operation of the wind turbine.

It is the object of the invention to provide an improved rotor hub for a wind turbine.

This is inventively achieved by a rotor hub as initially described, characterised in that the front portion is at least partially built of a sandwich-construction.

The inventive principle suggests a rotor hub, comprising a sandwich-construction provided with the front portion of its base body. Thereby, front portion refers to the axially freely exposed portion of a respective second section of the base body of the rotor hub, i.e. a respective section being oppositely disposed relative to a respective first section having a connecting site connectable with a wind turbine structure, i.e. for connecting the rotor hub with a wind turbine structure or respective wind turbine structure elements such as a nacelle of a wind turbine and/or a respective shaft of a wind turbine. The front portion may have a disc- or ring-like shape for instance.

According to the inventive principle, the front portion of the base body of the rotor hub, which may be a single-part component or a multi-part component, is at least partially provided with a respective sandwich-construction providing the front portion and the entire rotor hub with additional mechanical stability, i.e. mechanical stiffness. Additionally, sandwich-constructions are comparatively light-weight structures reducing the total weight of the rotor hub which is of advantage in regard of handling of the rotor hub.

The sandwich-construction may comprise at least two opposing stiffening layers and at least one intermediate layer disposed in between the stiffening layers. The stiffening layers, which preferably entirely cover the top or bottom surface of the intermediate layer, are usually comparatively thin compared with the intermediate layer. In comparison to the intermediate layer, the stiffening layers are provided with high bending stiffness. In such a manner, a respective sandwich-construction is a component or element having a high bending stiffness and comparatively low weight. The stiffening layers may also be denoted as skin layers, whereas the intermediate layer(s) may also be denoted as core layers.

It is possible that the stiffening layers are made of metal, particularly iron-based metal, and/or composite material, particularly fibre-reinforced plastic material. Metals generally embrace all kinds of metals or sheet metals having good mechanical properties, i.e. particularly high bending stiffness. Preferably, iron iron-based metals, i.e. particularly steel, are used for providing respective stiffening elements. Yet, other metals or metal alloys apart from iron-based metals, such as titanium for instance, may be used as well. Composite materials generally also comprise good mechanical properties and embrace all kinds of fibre materials, i.e. particularly glass fibres and/or carbon fibres and/or inorganic fibres distributed in plastic or resin-like materials representing a matrix material. Composite materials also embrace all kinds of laminate structures of fibres reinforcing plastic or resin-like materials.

The intermediate layer may be made of plastic or composite material, particularly fibre-reinforced plastic material. All aforementioned annotations regarding respective composite materials apply here. Hence, the intermediate layer may be provided with a respective structural stiffness in dependency of the respective applied composite material.

In order to reduce weight of the sandwich-structure, the intermediate layer may comprise an intermediate layer body having a comb-like and/or cellular structure. Comb-like or cellular structures such as open or closed cellular foam structures made of plastics, metals, or ceramics for instance provide both high specific stiffness and low weight and are therefore preferably used for building a respective intermediate layer.

The stability of the sandwich-construction may be enhanced, when the intermediate layer is attached to the stiffening layers. Thereby, attaching the intermediate layer to the respective stiffening layers generally embraces all kinds of attachment types assuring a mechanically firm and stable connection between the intermediate layer and the respective stiffening layers.

Thereby, attachment of the intermediate layer(s) is preferably provided by means of at least one bonding agent, preferably an adhesive means, and/or by welding and/or brazing. In either case, non-detachable and hence, mechanically stable connections of the intermediate layer(s) and the stiffening layers are feasible.

Regarding the connection of the front portion and the remainder of the base body of the rotor hub it is possible that the front portion is attached to at least one flange-like portion provided with the base body. In such a manner, the base body may comprise an aperture having, particularly radially extending and possibly integrally built, flange-like portions to which the sandwich-construction building the front portion of the rotor hub is securely attached, i.e. bolted, welded or the like. Particularly, respective flange-like portions are attached to the stiffening layers of the sandwich-construction.

Aside, the invention refers to a wind turbine, particularly a direct drive wind turbine, comprising at least one rotor hub as specified above.

In the following, the invention is described in detail as reference is made to the principle drawings, whereby:
- fig. 1: a perspective view of a rotor hub according to an exemplary embodiment of the invention;
- fig. 2: a perspective cut-view of the rotor hub according to fig. 1;
- fig. 3: a vertically cut-view of a rotor hub according to a further exemplary embodiment of the invention;
- fig. 4: a first view of the detail of fig. 3; and
- fig. 5: a second view of the detail of fig. 3.

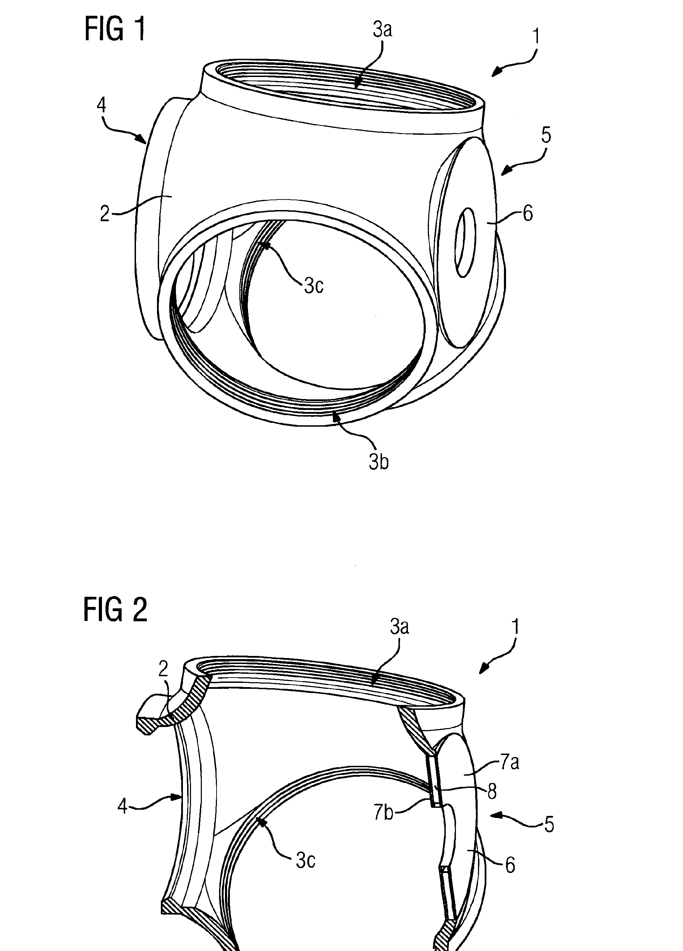

Fig. 1 shows a perspective view of a rotor hub 1 according to an exemplary embodiment of the invention. In known manner, the rotor hub 1 is adapted to support a number of rotor blades (not shown) of a wind turbine (not shown). Therefore, the base body 2 of the rotor hub 1 is provided with respective connecting sites 3a, 3b, 3c for supporting respective rotor blades. The connection sites 3a, 3b, 3c may serve as bearing (outer) rings of respective rotor blade bearings (not shown).

The rotor hub 1 may be attached to a wind turbine (not shown) in known manner. Therefore, the base body 2 of the rotor hub 1 comprises a first section 4 providing a connecting site connectable with a wind turbine structure such as a wind turbine nacelle or the like. A second section 5 in opposite disposal relative to the first section 4 provides a freely exposed ring-like shaped front portion 6.

As is discernible from fig. 2 showing a perspective cut-view of the rotor hub 1 according to fig. 1, the front portion 6 is built of a sandwich-construction. The sandwich-construction comprises two opposing ring-like shaped stiffening layers 7a, 7b and an intermediate layer 8 disposed in between the stiffening layers 7a, 7b, i.e. in the annular space or cavity provided between the stiffening layers 7a, 7b. In exceptional cases, the annular space between the stiffening layers 7a, 7b may be left empty, i.e. a respective intermediate layer 8 is not obligatorily provided.

The stiffening layers 7a, 7b are made of metal, particularly iron-based metal, i.e. steel. Hence, the stiffening layers 7a, 7a are provided as plain steel plates. In alternative embodiments, the stiffening layers could also be made of composite material, particularly fibre-reinforced plastic material.

The intermediate layer 8 is made of plastic or composite material, particularly fibre-reinforced plastic material. Particularly, the intermediate layer 8 comprises an intermediate layer body having a comb-like structure. The intermediate layer body could also be made of a cellular or foamed plastic or composite material. The intermediate layer 8 is firmly attached to the stiffening layers 7a, 7 by means of adhering, welding, or brazing for instance.

The remainder of the base body 2 of the rotor hub 1, i.e. all parts of the base body 2 apart from the front portion 6 may be built as a cast (metal) part as is known from prior art.

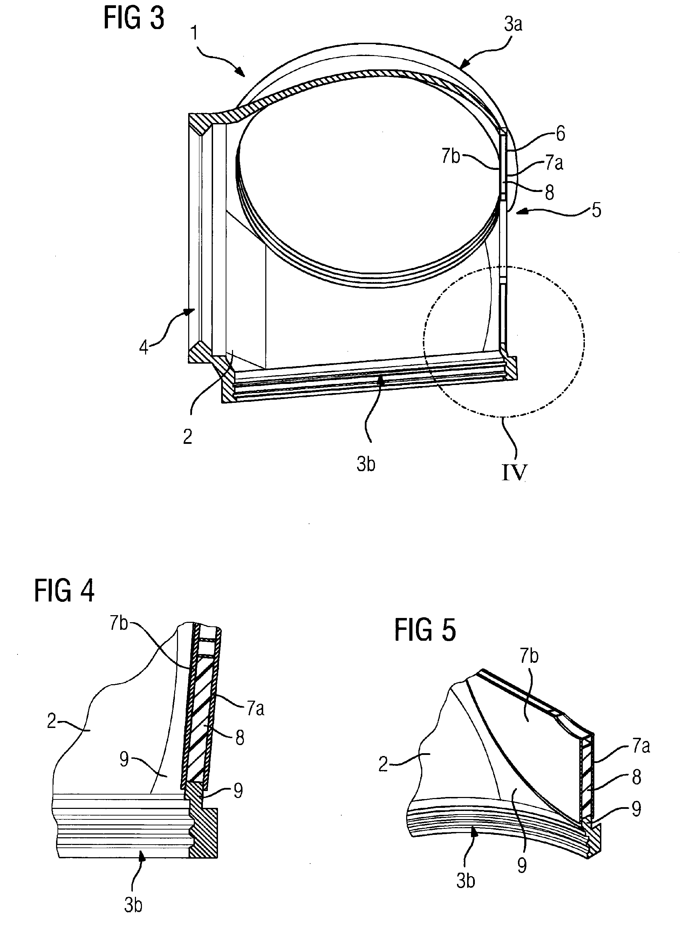

As is particularly discernible from the fig. 3-5, whereby fig. 3 shows a vertically cut-view of a rotor hub 1 according to a further exemplary embodiment of the invention and fig. 4, 5 show respective first and second views of the detail of fig. 3, the sandwich-construction building the front portion 6 is attached to the base body 2 of the rotor hub 1 by means of respective flange-like portions 9a, 9b extending off the base body 2 in radial (cf. flange-like portion 9a) and/or axial (cf. flange-like portion 9b) direction.

The front portion 6 is securely attached, i.e. bolted, welded or the like to the respective flange-like portions 9a, 9b of the base body 2 of the rotor hub 1. As is discernible from fig. 4, 5, respective flange-like portions 9a may be attached to the stiffening layers 7a, 7b as well as the intermediate layer 8 of the sandwich-construction.

By providing the front portion 6 of the rotor hub 1 with a respective sandwich-construction, the front portion 6 as well as the entire rotor hub 1 is provided with high mechanical stability, i.e. particularly high mechanical (bending) stiffness, while the weight of the front portion 6 and thus the entire rotor hub 1 may be reduced. Furthermore, it is possible to dispose mechanically stable structures in the direct line of action of the load being applied or introduced to the rotor blade bearings, which is a favourable condition for the rotor blade bearings since they may encounter smaller fatigue damage.

As mentioned above, the inventive rotor hub 1 is ready to be connected with a wind turbine. The wind turbine may be a direct drive wind turbine, i.e. a wind turbine having a direct mechanical connection of a main shaft connected to the rotor hub 1 with a power generating unit such as a generator or a direct mechanical connection of the rotor hub 1 and a respective power generating unit such as a generator.

Although the present invention has been described in detail with reference to the preferred embodiment, the present invention is not limited by the disclosed examples from which the skilled person is able to derive other variations without departing from the scope of the invention.

## Claims

1. Rotor hub (1) for a wind turbine, adapted to support or supporting at least one rotor blade, with the rotor hub (1) comprising a base body (2) having a first section (4) providing a connecting site connectable with a wind turbine structure and an opposing second section (5) providing a freely exposed front portion (6), **characterised in that** the front portion (6) is at least partially built of a sandwich-construction.

2. Rotor hub according to claim 1, wherein the sandwich-construction comprises at least two opposing stiffening layers (7a, 7b) and at least one intermediate layer (8) disposed in between the stiffening layers (7a, 7b).

3. Rotor hub according to claim 2, wherein the stiffening layers (7a, 7b) are made of metal, particularly iron-based metal, and/or composite material, particularly fibre-reinforced plastic material.

4. Rotor hub according to claim 2 or 3, wherein the intermediate layer (8) is made of plastic or composite material, particularly fibre-reinforced plastic material.

5. Rotor hub according to one of the claims 2 - 4, wherein the intermediate layer (8) comprises an intermediate layer body having a comb-like and/or cellular structure.

6. Rotor hub according to one of the claims 2 - 5, wherein the intermediate layer (8) is attached to the stiffening layers (7a, 7b).

7. Rotor hub according to claim 6, wherein attachment of the intermediate layer (8) is provided by means of at least one bonding agent, preferably an adhesive means, and/or by welding and/or brazing.

8. Rotor hub according to one of the preceding claims, wherein the front portion (6) is attached to at least one flange-like portion (9a, 9b) provided with the base body (2).

9. Wind turbine, particularly direct drive wind turbine, comprising at least one rotor hub (1) according to one of the preceding claims.

## Patentansprüche

1. Rotornabe (1) für eine Windenergieanlage, die so ausgelegt ist, dass sie mindestens ein Rotorblatt tragen kann, oder mindestens ein Rotorblatt trägt, wobei die Rotornabe (1) einen Grundkörper (2) mit einem ersten Teil (4), der eine Verbindungsstelle bereitstellt, die sich mit einer Windenergieanlagenkonstruktion verbinden lässt, und mit einem gegenüberliegenden zweiten Teil (5) umfasst, der einen freiliegenden Vorderabschnitt (6) bereitstellt, **dadurch gekennzeichnet, dass** der Vorderabschnitt (6) zumindest teilweise in Verbundbauweise gebaut ist.

2. Rotornabe nach Anspruch 1, bei der die Verbundbauweise mindestens zwei gegenüberliegende Versteifungsschichten (7a, 7b) und mindestens eine zwischen den Versteifungsschichten (7a, 7b) angeordnete Zwischenschicht (8) umfasst.

3. Rotornabe nach Anspruch 2, bei der die Versteifungsschichten (7a, 7b) aus Metall, insbesondere auf Eisen basierendem Metall, und/ oder einem Verbundmaterial, insbesondere faserverstärktem Kunststoffmaterial, hergestellt sind.

4. Rotornabe nach Anspruch 2 oder 3, bei der die Zwischenschicht (8) aus Kunststoff- oder Verbundmaterial, insbesondere faserverstärktem Kunststoffmaterial, hergestellt ist.

5. Rotornabe nach einem der Ansprüche 2 bis 4, bei der die Zwischenschicht (8) einen Zwischenschichtkörper von kammartiger und/ oder zellenförmiger Konstruktion umfasst.

6. Rotornabe nach einem der Ansprüche 2 bis 5, bei der die Zwischenschicht (8) an den Versteifungsschichten (7a, 7b) befestigt ist.

7. Rotornabe nach Anspruch 6, bei der das Befestigen der Zwischenschicht (8) unter Verwendung mindestens eines Haftmittels, vorzugsweise eines Klebemittels, und/ oder durch Schweißen und/ oder Löten erfolgt.

8. Rotornabe nach einem der vorhergehenden Ansprüche, bei der der Vorderabschnitt (6) an mindestens einem flanschartigen Abschnitt (9a, 9b) befestigt ist, welcher sich am Grundkörper (2) befindet.

9. Windenergieanlage, insbesondere getriebelose Windenergieanlage, mit mindestens einer Rotornabe (1) nach einem der vorhergehenden Ansprüche.

## Revendications

1. Moyeu (1) de rotor pour une éolienne, adapté à supporter ou supportant au moins une pale de rotor, avec le moyeu (1) de rotor comprenant un corps (2) de base ayant une première section (4) offrant un site de connexion pouvant être connecté avec une structure d'éolienne et une deuxième section (5) en opposition offrant une partie avant (6) librement exposée, **caractérisé en ce que** la partie avant (6) est au moins partiellement constituée d'une construction en sandwich.

2. Moyeu de rotor selon la revendication 1, dans lequel la construction en sandwich comprend au moins deux couches de raidissage (7a, 7b) en opposition et au moins une couche intermédiaire (8) disposée entre les couches de raidissage (7a, 7b).

3. Moyeu de rotor selon la revendication 2, dans lequel les couches de raidissage (7a, 7b) sont constituées d'un métal, particulièrement d'un métal à base de fer, et/ou d'un matériau composite, particulièrement un matériau plastique renforcé de fibres.

4. Moyeu de rotor selon la revendication 2 ou 3, dans lequel la couche intermédiaire (8) est constituée d'un plastique ou d'un matériau composite, particulièrement un matériau plastique renforcé de fibres.

5. Moyeu de rotor selon l'une des revendications 2 à 4, dans lequel la couche intermédiaire (8) comprend un corps de couche intermédiaire ayant une structure de type en peigne et/ou cellulaire.

6. Moyeu de rotor selon l'une des revendications 2 à 5, dans lequel la couche intermédiaire (8) est fixée aux couches de raidissage (7a, 7b).

7. Moyeu de rotor selon la revendication 6, dans lequel la fixation de la couche intermédiaire (8) est prévue au moyen d'au moins un agent de liaison, préférablement un moyen adhésif, et/ou par une soudure et/ou une brasure.

8. Moyeu de rotor selon l'une des revendications précédentes, dans lequel la partie avant (6) est fixée à au moins une partie (9a, 9b) de type bride prévue avec le corps (2) de base.

9. Éolienne, particulièrement une éolienne à entraînement direct, comprenant au moins un moyeu (1) de rotor selon l'une des revendications précédentes.
